**Europäisches Patentamt**

**European Patent Office**

**Office européen des brevets**

(19)

(11) Veröffentlichungsnummer: **0 069 354**
A1

(12) ## EUROPÄISCHE PATENTANMELDUNG

(21) Anmeldenummer: 82105884.9

(22) Anmeldetag: 01.07.82

(51) Int. Cl.³: **B 01 D 21/10**
B 01 D 21/24, C 02 F 1/00

(30) Priorität: 04.07.81 DE 3126413

(43) Veröffentlichungstag der Anmeldung:
12.01.83 Patentblatt 83/2

(84) Benannte Vertragsstaaten:
IT

(71) Anmelder: Menzel GmbH. + Co.
Hedelfinger Strasse 95
D-7000 Stuttgart 60(DE)

(72) Erfinder: Schneider, Norbert
Holbeinstrasse 13
D-5657 Haan(DE)

(74) Vertreter: Grupe, Peter, Dipl.-Ing. et al,
Patentanwaltsbüro
Tiedtke-Bühling-Kinne-Grupe-Pellmann-Grams
Bavariaring 4
D-8000 München 2(DE)

(54) **Verfahren und Vorrichtung zur Behandlung einer Flüssigkeit.**

(57) Bei diesem Verfahren zur Behandlung einer Flüssigkeit, insbesondere Abwasser (13), wird letzteres über einen Zulauf (19) in ein Becken (1, 22) eingeleitet und über einen Ablauf (18) aus diesem abgeführt.

Zur Erzielung einer Trennung bzw. Ausscheidung mineralischer Sinkstoffe von leichteren organischen Sinkstoffen wird das Abwasser (13) im Becken (1, 22) in eine solche Horizontalströmung (16) versetzt, die vom Zulauf (19) und Ablauf (18) des Abwassers (13) im wesentlichen unabhängig ist und an der Oberfläche (14) des Abwassers (13) weitgehend turbulenzarm ist.

FIG. 1

EP 0 069 354 A1

## Verfahren und Vorrichtung zur Behandlung einer Flüssigkeit

Die Erfindung betrifft ein Verfahren zur Behandlung
einer Flüssigkeit entsprechend den Merkmalen des Oberbegriffs des Anspruchs 1 sowie eine Vorrichtung zur
Durchführung des Verfahrens.

Zur Aufbereitung von Abwasser sind sogenannte Sandfänge
bekannt, die ein Becken mit einem Zulauf und einem Ablauf für das Abwasser aufweisen. In einem solchen Sandfangbecken sollen die verhältnismäßig schweren mineralischen Sinkstoffe ausgeschieden werden, ohne daß die
leichteren organischen Sinkstoffe ebenfalls absinken
und damit zum Ausscheiden gelangen. Dazu ist ein solcher
Sandfang zumeist konstruktiv so ausgebildet, daß das
zugeführte Abwasser durch das Sandfangbecken möglichst
mit einer solchen Geschwindigkeit fließt, bei der sich
die schwereren mineralischen Sinkstoffe absetzen können,
während die leichteren organischen Sinkstoffe im zu
behandelnden Abwasser verbleiben. Hierbei wird bemängelt,
daß die Abscheidung der mineralischen Sinkstoffe im
praktischen Betrieb nicht exakt genug eingehalten werden
kann und die Toleranzbreite verhältnismäßig groß ist,
da aufgrund der verhältnismäßig stark unterschiedlich
anfallenden Abwassermengen sowie der sich verändernden
Strömungswiderstände im Sandfangbecken wegen der abgesetzten mineralischen Sinkstoffe stets unterschiedliche Bedingungen vorhanden sind, so daß eine zufriedenstellende Gleichmäßigkeit des Verfahrens- bzw. Behandlungsablaufs nicht zu erzielen ist. Das heißt, daß ofmals auch nicht unerhebliche Teile der leichteren organischen Sinkstoffe mit ausgeschieden werden, oder daß eine nicht ausreichende Abscheidung der mineralischen Sinkstoffe erfolgt.

Weiterhin sind belüftete Sandfänge bekannt, wobei eine Turbulenz zur Vermeidung eines Absetzens der leichteren organischen Sinkstoffe hervorgerufen wird, indem in Randbereichen Druckluft eingeblasen wird, die bedingt durch den Lufthebereffekt eine spiralförmige Strömung um eine Achse hervorruft. Diese Strömung wird dann durch Einstellung der Luftmenge auf eine entsprechende Geschwindigkeit gebracht, wobei es möglich ist, einen gegenüber dem vorbeschriebenen Verfahren toleranzärmeren Trenneffekt zwischen den mineralischen und den organischen Sinkstoffen zu erreichen. Dabei ist es jedoch nachteilig, daß der Lufeintrag in das praktisch unbehandelte Rohabwasser einen verhältnismäßig starken Strippungseffekt bei geruchsintensiven Stoffen wie z.B. Schwefelwasserstoff hervorrufen kann, so daß eine starke Beeinträchtigung der Umgebung der gesamten Kläranlage verursacht wird. Dieser Strippungseffekt ist umso stärker, je länger der Fließweg des Abwassers bis zur Kläranlage ist. Insbesondere wenn das Abwasser durch lange Druckrohrleitungen gepumt wird, entstehen dabei in besonderem Maße geruchsintensive Stoffe, die dann im belüfteten Sandfang ausgestrippt werden und eine äußerst starke und unangenehme Beeinträchtigung der Kläranlagenumgebung bewirkt. Ein weiterer Nachteil besteht darin, daß der erforderliche Energieaufwand für die Erzeugung der notwendigen Druckluft für die Abwassergeschwindigkeit im Sandfangbecken relativ hoch ist. Außerdem wird bemängelt, daß aufgrund der Spiralströmung die Oberfläche des Abwassers im Sandfangbecken verhältnismäßig turbulent ist, so daß hier eine Schwimmstoffabscheidung nur sehr schwer bzw. kaum möglich ist.

Demgemäß besteht die Aufgabe der Erfindung darin, ein Verfahren der eingangs beschriebenen Art so zu verbessern, daß eine energiesparende und mit enger Toleranz scharf trennende Stoffabscheidung möglich ist.

Diese Aufgabe wird erfindungsgemäß durch die Kennzeichnungsmerkmale des Anspruchs 1 gelöst.

Mit der Erfindung wird der Vorteil erreicht, daß durch die z.B. durch einen Rohrpropeller, eine Pumpe od. dgl. erzeugte Horizontalströmung, die vorzugsweise in einem geschlossenen System praktisch als endlose Kreisströmung fließt, eine hohe Konstanz bzw. Gleichmäßigkeit mit einer Geschwindigkeit von etwa 30 cm pro Sekunde erzielt werden kann, wobei diese erfindungsgemäße Horizontalströmung mit verhältnismäßig geringem Energieaufwand aufrecht erhalten werden kann. Durch eine entsprechende Regulierung des Rohrpropellers bzw. der Pumpenleistung ist es dabei möglich, die gewünschte Horizontalgeschwindigkeit im System weitgehend den jeweiligen Erfordernissen anzupassen, so daß eine bisher kaum mögliche Trennschärfe der Stoffe erzielt werden kann. Während die schwereren, hauptsächlich mineralischen Sinkstoffe nach unten absinken, bleiben die leichteren organischen Sinkstoffe in der Horizontalströmung des Abwassers in Schwebe, so daß eine scharfe Tennung gegeben ist. Da aufgrund der Horizontalströmung des erfindungsgemäßen Verfahrens die Oberfläche des Abwassers weitgehend turbulenzfrei ist, ist der weitere Vorteil gegeben, ohne besondere Maßnahmen die an der Wasseroberfläche auftretenden Schwimmstoffe auf einfache Art und Weise abzuführen. Die abgesetzten mineralischen Sinkstoffe können dem System mittels einer geeigneten Räumeinrichtung entnommen werden. Es besteht auch die Möglichkeit, die Entnahme der Sinkstoffe zum Beispiel mit Lufthebern bzw. trocken oder naß aufgestellten, mitfahrenden Pumpen durchzuführen, die z.B. an Längs- oder Rundräumern vorgesehen werden können. Die Systeme können zudem Einrichtungen wie Hydrozyklon, Sandsilo, Sammelrinne und so weiter aufweisen. Die schwereren mineralischen Sinkstoffe können in einer Rinne aufgefangen werden. Es ist aber auch möglich, daß sich die mineralischen Sinkstoffe in einer trichterförmigen Vertiefung, die im Becken zentrisch angeordnet sein kann, absetzen und von dort ohne weitere Räumvorrichtung direkt mit entsprechenden Fördervorrichtungen entn-ommen werden. Die ausgeschiedenen Sinkstoffe können durch Wascheinrichtungen, Klassierer u. ägl. einer weiteren Nachbehandlung unterzogen werden.

Bevorzugte Ausgestaltungen und Weiterbildungen der Erfindung sind durch die Merkmale der Unteransprüche gekennzeichnet. Weitere Vorteile und Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

FIG. 1  eine Draufsicht auf einen als Rundbecken ausgeführten Sandfang,

0069354

FIG. 2 eine Schnittansicht des Sandfangs der FIG. 1,

FIG. 3 eine Draufsicht auf einen als langgestrecktes Grabenbecken ausgeführten Sandfang und

FIG. 4 eine Schnittansicht des Sandfangs der FIG. 3.

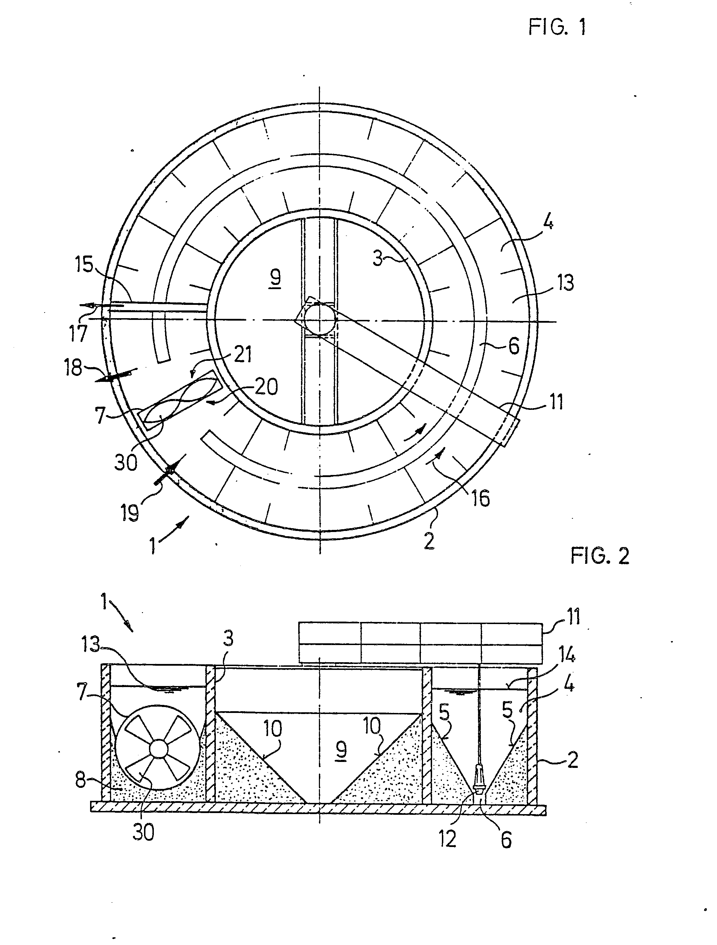

Der in den FIG. 1 und 2 als Rundbecken 1 dargestellte Sandfang weist eine kreisrunde Außenwandung 2 und eine kreisrunde Innenwandung 3 auf, die einen Ringgraben 4 seitlich begrenzen. Dieser Ringgraben 4 besitzt Schrägwandungsteile 5, die nach unten in Richtung zu einer Sammelrinne 6 geneigt zueinander verlaufen. Die Sammelrinne 6 erstreckt sich somit etwa im Mittenbereich des Ringgrabens 4.

Außerdem ist im Ringgraben 4 ein als Propeller ausgebildeter Strömungserzeuger 7 angeordnet. Im unteren Bereich des Strömungserzeugers 7 ist eine Querwandung 8 im Ringgraben 4 ausgebildet.

Weiterhin ist zu erkennen, daß die Innenwandung 3 des Rundbeckens 2 einen Sinkstoffspeicher 9 begrenzt, der sich in der Mitte des Rundbeckens 1 befindet. Der Sinkstoffspeicher 9 ist somit vom Ringgraben 4 umgeben. Außerdem ist ersichtlich, daß der Sinkstoffspeicher im Querschnitt trichterförmig ausgeführt ist und dazu Schrägwände 10 besitzt. Im Sinkstoffspeicher 9 können ausgeschiedene Sinkstoffe gelagert werden. Der Sinkstoffspeicher 9 kann aber auch für anderweitige Abwasserbehandlungsprozesse herangezogen werden und kann hier nicht näher dargestellte Zu- und Abführungen od. dgl. aufweisen. Die im Sinkstoffspeicher 9 gelagerten

0069354
EP 2296

Sinkstoffe können im Bedarfsfalle durch ein vorzugsweise im Mittenbereich des Trichters wirkendes Abzugsaggregat ausgetragen werden. Das Rundbecken 1 besitzt zudem eine Räumerbrücke 11, die über dem Ringgraben 4 verfahrbar ist. An der Räumerbrücke 11 ist ein als Pumpe ausgeführtes Sinkstoffabsaugaggregat 12 angeordnet, das sich dicht über der Sammelrinne 6 befindet und mit der Räumerbrücke 11 verfahrbar ist. Das Sinkstoffabsaugaggregat 12 kann zusätzlich einen Pumpenteil aufweisen, der das im Ringgraben 4 befindliche Abwasser 13 in eine horizontale Strömung versetzt. Auch liegt es im Rahmen der Erfindung, eine horizontale Strömung des Abwassers 13 über ein Paddel zu erzeugen, das ebenfalls vorzugsweise an der Räumerbrücke 11 angeordnet sein kann.

Im Bereich der Oberfläche 14 des Abwassers 13 ist eine Schwimmstoffabführrinne 15 vorgesehen, die sich quer zu einer vom Strömungserzeuger 7 bewirkten Horizontalströmung 16 des Abwassers 13 erstreckt und einen Austritt 17 zur Abführung der aufgefangenen Schwimmstoffe besitzt. Die Schwimmstoffabführrinne 15 befindet sich im wesentlichen nahe vor einem Ablauf 18 des Abwassers 13, so daß in Richtung der Horizontalströmung 16 gesehen ein langer Weg vom Zulauf 19 des Abwassers 13 bis zur Schwimmstoffabführrinne 15 gegeben ist. Der Zulauf 19 befindet sich im Bereich der Druckseite 20 dicht vor dem Strömungserzeuger 7, während der Ablauf 18 nahe der Saugseite 21 des Strömungserzeugers 7 angeordnet ist.

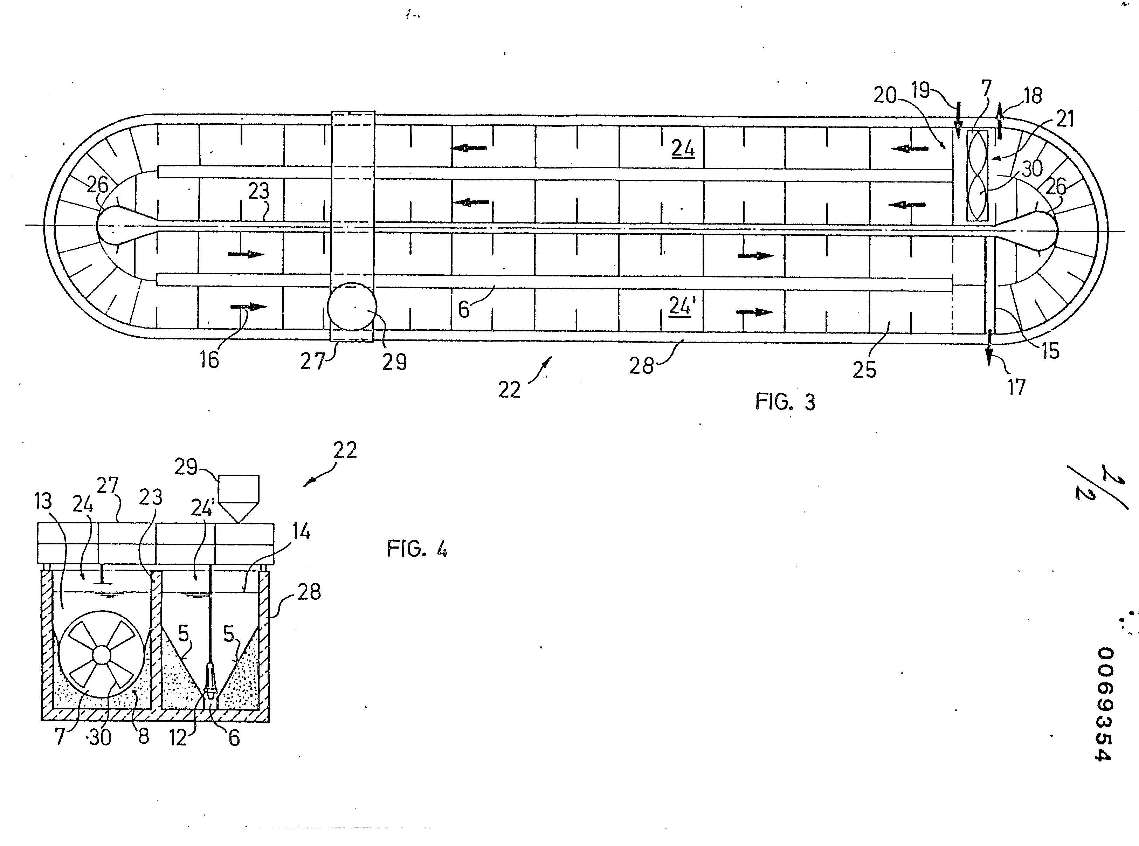

Bei dem in den FIG. 3 und 4 dargestellten Ausführungsbeispiel ist der Sandfang als langgestrecktes Grabenbecken 22 ausgeführt. Dabei ist zu erkennen, daß die Innenwandung 23 zwischen zwei Grabenteilen 24,24' des Ringgrabens 25 angeordnet ist und diese somit trennt. Die Enden der Innenwandung 23 besitzen strömungsgünstige Abrundungen 26.

Die Räumerbrücke 27, an der das Sinkstoffabsaugeaggregat 12 befestigt ist, ist nicht wie beim vorbeschriebenen Ausführungsbeispiel um eine Mittenachse kreisförmig, sondern in Längsrichtung des Grabenbeckens 22 geradlinig verfahrbar. Der als Propeller ausgeführte Strömungserzeuger 7 befindet sich ebenfalls zwischen dem Zulauf 19 und dem Ablauf 18 des Abwassers 13, wobei der Zulauf 19 der Druckseite 20 und der Ablauf 18 der Saugseite 21 nahe liegt. Die im Bereich der Oberfläche 14 des Abwassers 13 angeordnete Schwimmstoffabführrinne 15 mit ihrem Austritt 17 liegt auf der dem Ablauf 18 gegenüberliegenden Seite des Grabenbeckens 22. Der von der Außenwandung 28 und der Innenwandung 23 begrenzte Ringgraben 25 besitzt ebenfalls Schrägwandungsteile 5, die in Richtung zur Sammelrinne 6 nach unten geneigt verlaufen. Auch ist eine Querwandung 8 im unteren Bereich des Strömungserzeugers 7 im Ringgraben 25 vorgesehen. Auf der Räumerbrücke 27 befindet sich zur Sandentwässerung ein Hydrozyklon 29.

Der propellerartige Strömungserzeuger 7 kann durch einen Unterwassermotor angetrieben werden. Hierbei kann vorteilhaft eine Drehzahlregelung vorgesehen sein, so daß die Geschwindigkeit der Horizontalströmung 16 des Abwassers 13 genau eingestellt bzw. an die Gegebenheiten angepaßt werden kann. Dazu ist es auch vorteilhaft, die Propellerflügel 30 des Strömungserzeugers 7 in ihrem Anstellwinkel verstellbar auszubilden, so daß auch dadurch eine Geschwindigkeitsregelung möglich ist.

Die Horizontalströmung 16 ist erfindungsgemäß so ausgeführt, daß an der Oberfläche 14 des Abwassers 13 praktisch keine wesentlichen Turbulenzen entstehen, so daß es auf einfache Art und Weise möglich ist, die sich an der Oberfläche 14 ansammelnden Schwimmstoffe über die Schwimmstoffabführrinne 15 abzuleiten und eventuell zu einem Fettabscheider zu führen. Darüber hinaus ist die Horizontalströmung 16 jedoch so beschaffen, daß im Bereich unter der Oberfläche 14 eine ausreichende Turbulenz besteht, um die leichteren organischen Sinkstoffe in Schwebe zu halten, so daß nur die schwereren mineralischen Sinkstoffe sich in Richtung zur Sammelrinne 6 absetzen, wodurch eine scharfe Trennung der Stoffe gegeben ist. Die kreisförmige Horizontalströmung 16, die sowohl im Rundbecken 1 als auch im Grabenbecken 22 vom Zulauf 19 in Richtung zum Ablauf 18 erfolgt, wird zum Zwecke der scharfen Trennung der Sinkstoffe vornehmlich schwankungsfrei konstant gefahren, kann aber bei unterschiedlichen Anforderungen in einem vorgegebenen Bereich variiert werden. Die Strömungsgeschwindigkeit der Horizontalströmung 16 des Abwassers 13 liegt beim erfindungsgemäßen Verfahren vorzugsweise bei etwa 0,2 bis 0,4 m pro Sekunde, wobei in den meisten Fällen mit etwa 0,3 m pro Sekunde gefahren wird.

P a t e n t a n s p r ü c h e

1. Verfahren zur Behandlung einer Flüssigkeit, insbesondere Abwasser, das über einen Zulauf in ein Becken
eingeleitet und über einen Ablauf aus diesem abgeführt
wird, dadurch gekennzeichnet, daß das Abwasser (13) im
Becken (1;22) zur Trennung bzw. Ausscheidung mineralischer Sinkstoffe von leichteren organischen Sinkstoffen in eine vom Zulauf (19) und Ablauf (18) im
wesentlichen unabhängige, weitgehend oberflächenturbulenzfreie Horizontalströmung (16) versetzt wird.

2. Verfahren nach vorstehendem Anspruch, dadurch gekennzeichnet, daß die Horizontalströmung (16) des Abwassers (13) im Becken (1,22) im wesentlichen kreisförmig verläuft.

3. Verfahren nach einem der vorstehenden Ansprüche,
dadurch gekennzeichnet, daß die Horizontalströmung (16)
des Abwassers (13) im Becken (1,22) vom Zulauf (19) in
Richtung zum Ablauf (18) erfolgt.

4. Verfahren nach einem der vorstehenden Ansprüche, dadurch gekennzeichnet, daß die Strömungsgeschwindigkeit der Horizontalströmung (16) des Abwassers (13) im Becken (1,22) im wesentlichen schwankungsfrei konstant ist und in einem vorgegebenen Bereich regelbar ist.

5. Verfahren nach einem der vorstehenden Ansprüche, dadurch gekennzeichnet, daß die Strömungsgeschwindigkeit der Horizontalströmung (16) des Abwassers (13) im Becken (1,22) in etwa ein Zehntel bis acht Zehntel Meter je Sekunde, vorzugsweise zwei Zehntel bis vier Zehntel Meter je Sekunde beträgt.

6. Verfahren nach einem der vorstehenden Ansprüche, dadurch gekennzeichnet, daß an der turbulenzarmen Oberfläche (14) des horizontal strömenden Abwassers (13) im Becken (1,22) sich ansammelnde Schwimmstoffe im wesentlichen quer zur Horizontalströmung (16) abgeleitet werden.

7. Vorrichtung zur Durchführung des Verfahrens, dadurch gekennzeichnet, daß im Abwasser (13) des Beckens (1,22) für die Horizontalströmung (16) ein motorisch od. dgl. getriebener Strömungserzeuger (7) angeordnet ist.

8. Vorrichtung nach vorstehendem Anspruch, dadurch gekennzeichnet, daß der Strömungserzeuger (7) als Propeller ausgebildet ist.

9. Vorrichtung nach einem der vorstehenden Ansprüche, dadurch gekennzeichnet, daß die Drehzahl des Strömungserzeugers (7) zur Geschwindigkeitsregelung der Horizontalströmung (16) des Abwassers (13) veränderlich steuerbar ist.

10. Vorrichtung nach einem der vorstehenden Ansprüche, dadurch gekennzeichnet, daß der als Propeller ausgeführte Strömungserzeuger (7) in im Anstellwinkel verstellbare Propellerflügel (30) aufweist.

11. Vorrichtung nach einem der vorstehenden Ansprüche, dadurch gekennzeichnet, daß der Strömungserzeuger (7) im Bereich zwischen dem Zulauf (19) und dem Ablauf (18) des Abwassers (13) im Becken (1,22) angeordnet ist.

12. Vorrichtung nach einem der vorstehenden Ansprüche, dadurch gekennzeichnet, daß der Zulauf (19) des Abwassers (13) im wesentlichen nahe der Druckseite (20) und der Ablauf (18) im wesentlichen na-he der Saugseite (21) des Strömungserzeugers (7) angeordnet ist.

13. Vorrichtung nach einem der vorstehenden Ansprüche, dadurch gekennzeichnet, daß der Strömungserzeuger (7) in einem von einer Außenwandung (2,28) und einer Innenwandung (3,23) des Beckens (1,22) begrenzten Ringgraben (4,25) angeordnet ist.

14. Vorrichtung nach einem der vorstehenden Ansprüche, dadurch gekennzeichnet, daß eine Querwandung (8) im Ringgraben (4,25) unter dem Strömungserzeuger (7) angeordnet ist.

15. Vorrichtung nach einem der vorstehenden Ansprüche, dadurch gekennzeichnet, daß der Ringgraben (4,25) des Beckens (1,22) von der Außenwandung (2,28) und der Innenwandung (3,23) geneigt nach unten zueinander verlaufende Schrägwandungsteile (5) und eine im Mittenbereich zwischen den Schrägwandungsteilen (5) angeordnete Sammelrinne (6) aufweist.

16. Vorrichtung nach einem der vorstehenden Ansprüche, dadurch gekennzeichnet, daß zwischen den Schrägwandungsteilen (5) im Becken (1,22) dicht über der Sammelrinne (6) ein Sinkstoffabsaugaggregat (12) angeordnet ist.

17. Vorrichtung nach einem der vorstehenden Ansprüche, dadurch gekennzeichnet, daß das Sinkstoffabsaugaggregat (12) an einer über dem Becken (1,22) verfahrbaren Räumerbrücke (11,27) angeordnet und entlang der Sammelrinne (6) bewegbar ist.

18. Vorrichtung nach einem der vorstehenden Ansprüche, dadurch gekennzeichnet, daß im Bereich der Oberfläche (14) des Abwassers (13) im Ringgraben (4,25) zwischen der Außenwandung (2,28) und der Innenwandung (3,23) des Beckens (1,22) eine zur Horizontalströmung (16) des Abwassers (13) quergerichtete Schwimmstoffabführrinne (15) angeordnet ist.

19. Vorrichtung nach einem der vorstehenden Ansprüche, dadurch gekennzeichnet, daß die Schwimmstoffabführrinne (15) in Strömungsrichtung wesentlich näher am Ablauf (18) als am Zulauf (19) des Abwassers (13) im Ringgraben (4,25) des Beckens (1,22) angeordnet ist.

20. Vorrichtung nach einem der vorstehenden Ansprüche, dadurch gekennzeichnet, daß zur Horizontalströmung (16) des Abwassers (13) im Becken (1,22) eine Pumpe vorgesehen ist.

21. Vorrichtung nach einem der vorstehenden Ansprüche, dadurch gekennzeichnet, daß die Fördermenge der Pumpe regelbar ist.

22. Vorrichtung nach einem der vorstehenden Ansprüche, dadurch gekennzeichnet, daß die Horizontalströmung (16) des Abwassers (13) von einem Pumpenteil des Sinkstoffabsaugaggregats (12) erzeugt wird.

23. Vorrichtung nach einem der vorstehenden Ansprüche, dadurch gekennzeichnet, daß für die Horizontalströmung ('16) des Abwassers (13) ein vorzugsweise an der Räumerbrücke (11,27) angeordnetes Paddel vorgesehen ist.

24. Vorrichtung nach einem der vorstehenden Ansprüche, dadurch gekennzeichnet, daß die Innenwandung (3) des Beckens (1) einen in dessen Mittenbereich ausgebildeten Sinkstoffspeicher (9) begrenzt, der von dem die Horizontalströmung (16) des Abwassers (13) führenden, vorzugsweise kreisringförmigen Ringgraben (4) umgeben ist.

25. Vorrichtung nach einem der vorstehenden Ansprüche, dadurch gekennzeichnet, daß der Sinkstoffspeicher (9) Schrägwände (10) aufweist und im wesentlichen trichterförmig ausgebildet ist.

26. Vorrichtung nach einem der vorstehenden Ansprüche, dadurch gekennzeichnet, daß die Innenwandung (23) des vorzugsweise langgestreckten Beckens (22) als Trennwand zwischen zwei parallel nebeneinander angeordneten Grabenteilen (24,24') des Ringgrabens (25) ausgebildet ist.

½

FIG. 1

FIG. 2

0069354

FIG. 3

FIG. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 029 641 (PASSAVANT-WERKE) *Seiten 1-6* | 1,2,3, 4,5,7, 16,17, 23 | B 01 D 21/10 B 01 D 21/24 C 02 F 1/00 |
| Y | US-A-4 226 717 (A.P.MALM) *Spalten 2-6* | 1,3,15 | |
| Y | US-A-2 136 903 (E.W.A.HOMPHREYS) *Seiten 1-2* | 1,15, 26 | |
| Y | DE-B-1 256 167 (H.GEIGER) *Spalten 2-4* | 1,15, 16,17, 26 | |
| A | DE-A-2 852 543 (MENZEL) | | RECHERCHIERTE SACHGEBIETE (Int. Cl. ³) |
| A | DE-A-2 842 651 (MENZEL) | | B 01 D C 02 F |
| A | DE-A-2 648 545 (MENZEL) | | |

Der vorliegende Recherchenbericht wurde für alle Patentansprüche erstellt.

| Recherchenort DEN HAAG | Abschlußdatum der Recherche 13-09-1982 | Prüfer DE PAEPE P.F.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82